# EUROPÄISCHE PATENTANMELDUNG

(11) **EP 2 755 010 A1**
(43) Veröffentlichungstag der Anmeldung: **16.07.2014**
(21) Anmeldenummer: 14150643.6
(22) Anmeldetag: 09.01.2014
(51) Int. Cl.: G01M 15/05, G01M 17/007

(54) **Diagnosevorrichtung und Prüfverfahren zur Leistungs-, Bremsen-, Abgas- oder Funktionsprüfung eines Kraftfahrzeugs mittels eines Kraftfahrzeugprüfstands**

(30) Priorität: 09.01.2013 DE 102013200207
(71) Anmelder: MAHA Maschinenbau Haldenwang GmbH & Co. KG, 87490 Haldenwang (DE)
(72) Erfinder: Beaujean, Frank Dipl.-Ing., 87542 Altusried (DE); Träger, Norman, 87651 Bidingen (DE)
(74) Vertreter: MERH-IP Matias Erny Reichl Hoffmann

(57) **Zusammenfassung**

Die Erfindung betrifft ein Prüfverfahren zur Leistungs-, Bremsen-, Abgas-, Sicherheits- oder Funktionsprüfung eines Kraftfahrzeugs mittels eines Kraftfahrzeugprüfstands. Die Erfindung betrifft weiterhin eine Schnittstellenvorrichtung, über die auf den Prüfstand mittels eines standardisierten Datenformats zugegriffen werden kann. Das Prüfverfahren umfasst das Bereitstellen einer Schnittstelle (13), die eine bidirektionale Datenkommunikation zwischen einem ersten Steuermittel (8) des Kraftfahrzeugprüfstands (7) und einem zweiten Steuermittel (11) einer Diagnosevorrichtung (10) für ein Kraftfahrzeug ermöglicht, wobei die Diagnosevorrichtung (10) über eine Diagnoseschnittstelle (3) des Kraftfahrzeugs (1) mit einer elektronischen Steuervorrichtung (2) des Kraftfahrzeugs kommuniziert; das Empfangen eines Steuerbefehls und/oder einer Prüfabfrage für den Kraftfahrzeugprüfstand (7) von dem zweiten Steuermittel (11) über die Schnittstelle (13) und Ausgeben eines durch den Kraftfahrzeugprüfstand (7) ermittelten Messwertes an das zweite Steuermittel (11) über die Schnittstelle (13). Für die Kommunikation zwischen dem zweiten Steuermittel (11) und der Schnittstelle (13) wird ein standardisiertes Datenformat, beispielsweise das ODX-Format verwendet, das auch für die Kommunikation der Diagnosevorrichtung (10) mit der elektronischen Steuervorrichtung (2) des Kraftfahrzeugs (1) verwendet wird.

## Beschreibung

Die Erfindung betrifft ein Prüfverfahren zur Leistungs-, Bremsen-, Abgas-; Sicherheits- oder Funktionsprüfung eines Kraftfahrzeugs mittels eines Kraftfahrzeugprüfstands. Die Erfindung betrifft weiterhin eine Schnittstellenvorrichtung, über die auf den Prüfstand mittels eines standardisierten Datenformats zugegriffen werden kann. Die Erfindung betrifft ferner eine Diagnosevorrichtung und einen Prüfstand mit einer derartigen Schnittstellenvorrichtung.

Prüfstände zur Leistungs-, Bremsen-, Abgas- oder Funktionsprüfung eines Kraftfahrzeugs sind aus dem Stand der Technik bekannt. Beispiele hierfür sind Funktions- und Leistungsprüfstände, mit denen ein Fahrzeug auf seine Eigenschaften, beispielsweise auf Motorleistung, Drehmoment, Motordrehzahl und/oder Geschwindigkeit im Rahmen einer Lastsimulation reproduzierbar geprüft werden kann. Ein weiteres Beispiel für Prüfstände sind Abgasprüfstände, mittels derer eine Abgasmessung des Fahrzeugs unter vorgegebenen Lastprofilen und Fahrzyklen durchgeführt werden kann.

Aus dem Stand der Technik sind weiterhin Diagnosevorrichtungen bekannt, die über eine Diagnoseschnittstelle des Fahrzeugs auf eine oder mehrere on-board elektronische Steuervorrichtungen des Fahrzeugs im Rahmen einer Offboard-Diagnose zugreifen können. Hierbei kommuniziert die externe Diagnosevorrichtung (auch externes Prüfgerät oder Diagnosetester genannt) über ein vorgegebenes, standardisiertes Kommunikationsprotokoll, dem Diagnoseprotokoll, mit den einzelnen Elektronikkomponenten, den sogenannten elektronischen Steuergeräten des Fahrzeugs. Als Bindeglied zwischen der Diagnosevorrichtung und dem Fahrzeug dienen die Diagnosedaten. Derartige Diagnosedaten sind beispielsweise in dem Open Diagnostic Data Exchange (ODX) Standard genormt. Diagnosedaten beschreiben das verwendete Diagrioseprotokoll, die einzelnen Befehle, deren mögliche Antworten vom Steuergerät und die Interpretation der Daten, zum Beispiel deren Umrechnung in physikalische Werte. ODX kann für verschiedenste Diagnoseprotokolle genutzt werden (zum Beispiel KWP2000 oder UDS), abhängig von der Protokollimplementierung.

Für die off-board Fahrzeugdiagnose haben die Fahrzeughersteller (OEMs) oder auch Drittanbieter verschiedenste Mess- und Prüfprotokolle entwickelt. Bei Ausführung des Prüfprotokolls liest die an die elektronische Steuervorrichtung des Fahrzeugs angeschlossene externe Diagnosevorrichtung die erforderlichen Diagnosewerte im ODX-Standard von der fahrzeuginternen elektronischen Steuervorrichtung aus.

Sollen bei der Fahrzeugdiagnose nicht nur Daten von der elektronischen Steuervorrichtung des Fahrzeugs, sondern auch Mess- und Prüfdaten eines Fahrzeugprüfstands ermittelt werden, wird in dem Mess- und Prüfprotokoll oftmals vorgegeben, welche Prüfschritte oder Betriebsmodi der Fahrzeugprüfstand hierzu auszuführen hat. Im Gegensatz zu den bei der Fahrzeugdiagnose abgefragten Diagnosedaten der fahrzeuginternen Steuereinrichtungen sind Prüfdaten der verschiedenen Prüfstände und der Zugriff auf diese Prüfstände nicht einheitlich.

Daher stellt in diesem Fall ein Nutzer, beispielsweise ein KFZ-Mechaniker, der die Fahrzeugdiagnose durchzuführen hat, den Prüfstand über die proprietäre Prüfstandbenutzerschnittstelle in der Regel so ein, dass dieser die vorgegebenen Prüfschritte ausführt und die benötigten Messwerte ermittelt, die dann beispielsweise ausgedruckt werden können.

Dies hat den Nachteil, dass der Nutzer sowohl die Diagnosesoftware der Diagnosevorrichtung bedienen muss, als auch die Steuerungssoftware der verschiedenen Prüfstände. Die zu bedienenden Softwareprogramme unterscheiden sich nicht nur für verschiedene Hersteller von Prüfständen, sondern oftmals auch für verschiedene Arten von Prüfständen des gleichen Herstellers. Dies erhöht nicht nur den Einarbeitungsaufwand für die Nutzer, sondern auch die Zeit, die für die Durchführung eines Diagnosevorgangs am Fahrzeug benötigt wird. Weiterhin entsteht dadurch das Risiko von fehlerhaften Diagnosen, wenn die im Prüfstand manuell vorgenommenen Einstellungen von den vorgegebenen Einstellungen des Prüfprotokolls abweichen.

Es ist somit eine Aufgabe der Erfindung, eine effizientere und weniger fehleranfällige Verwendung von Fahrzeugprüfständen bei der Fahrzeugdiagnose im Zusammenspiel mit externen Fahrzeugdiagnosevorrichtungen zu ermöglichen.

Diese Aufgabe wird durch das Prüfverfahren gemäß Anspruch 1, die Schnittstellenvorrichtung gemäß Anspruch 11, den Fahrzeugprüfstand gemäß Anspruch 12 und die Diagnosevorrichtung gemäß Anspruch 14 gelöst. Die abhängigen Patentansprüche betreffen vorteilhafte Ausgestaltungen der Erfindung.

Gemäß der vorliegenden Erfindung wird ein Prüfverfahren zur Leistungs-, Bremsen-, Abgas- Sicherheits- oder Funktionsprüfung eines Kraftfahrzeugs mittels eines Kraftfahrzeugprüfstands vorgeschlagen, bei dem eine Schnittstelle bereitgestellt wird, die eine bidirektionale Datenkommunikation zwischen einem ersten Steuermittel des Kraftfahrzeugprüfstands und einem zweiten Steuermittel einer Diagnosevorrichtung für ein Kraftfahrzeug ermöglicht, wobei die Diagnosevorrichtung über eine Diagnoseschnittstelle des Kraftfahrtzeugs mit einer elektronischen Steuervorrichtung des Kraftfahrzeugs kommuniziert. Ein Kraftfahrzeugprüfstand im Sinne dieser Erfindung umfasst auch Prüfstände für Landmaschinen, beispielsweise Zapfwellenprüfstände, oder Prüfstände für selbstfahrende Arbeitsgeräte und "Off-the-road"-Fahrzeuge.

Über das erste Steuermittel des Kraftfahrzeugprüfstands wird der Prüfstand angesprochen. Es ermöglicht den Zugriff auf die Prüfstandsfunktionen, die Abfrage von Prüfstandsdaten und die Steuerung des Prüfstands. Das erste Steuermittel kann in den Prüfstand integriert sein oder mit diesem über eine Datenverbindung kommunizieren. Beispielsweise kann das erste Steuermittel drahtlos Steuerbefehle und Datenabfragen an eine elektronische Steuerplatine des Prüfstandes senden. Unter dem zweiten Steuermittel, dem Steuermittel der Diagnosevorrichtung, soll die zentrale Steuereinheit der Diagnosevorrichtung verstanden werden, die benötigte Diagnosedaten von der elektronischen Steuereinheit des Fahrzeugs abfragt und auswertet.

Über die bidirektionale Schnittstelle kann erfindungsgemäß ein Steuerbefehl und/oder eine Prüfabfrage für den Kraftfahrzeugprüfstand von dem zweiten Steuermittel, dem Steuermittel der Diagnosevorrichtung, empfangen werden und ein durch den Kraftfahrzeugprüfstand ermittelter Messwert an dieses Steuermittel ausgegeben werden. Hierbei erfolgt die Kommunikation zwischen dem Steuermittel der Diagnosevorrichtung und der Schnittstelle in einem standardisierten Datenformat, das auch für die Kommunikation der Diagnosevorrichtung mit der elektronischen Steuervorrichtung des Kraftfahrzeugs verwendet wird. Dies ermöglicht einer Diagnosevorrichtung auf den Prüfstand in derselben Weise zuzugreifen, wie auf die elektronischen Steuervorrichtungen des Kraftfahrzeugs, so dass sich der Prüfstand von einem Onboard-Steuergerät diagnosetechnisch und zugriffstechnisch nicht mehr unterscheidet.

Vorzugsweise entspricht das standardisierte Datenformat dem Open Diagnostic Data Exchange (ODX)-Standard.

Vorzugsweise erfolgt die Kommunikation zwischen dem Steuermittel der Diagnosevorrichtung und der Schnittstelle mittels einem standardisierten Kommunikationsprotokoll, das auch für die Kommunikation der Diagnosevorrichtung mit der elektronischen Steuervorrichtung des Kraftfahrzeugs verwendet wird, beispielsweise mittels dem Unified Diagnostic Services (UDS)-Standard oder dem Key-Word-Protokoll (KWP2000)-Standard. Diese Standards sind die am weitesten verbreiteten Standards für den Zugriff auf die elektronische Steuervorrichtung des Fahrzeugs und die Fahrzeugdiagnose.

Das Vorsehen der erfindungsgemäßen Schnittstelle ermöglicht somit den direkten elektronischen Fernzugriff auf den Prüfstand, um diesen gemäß einem vorgegebenen Prüfprotokoll steuern und die vom Prüfstand ermittelten Werte abfragen zu können. Somit muss der Nutzer nur noch mit einer Software bzw. Bedienoberfläche vertraut sein, nämlich der der Diagnosevorrichtung. Da die Einstellungen des Prüfstandes über die Schnittstelle automatisiert an den Prüfstand von der Diagnosevorrichtung übertragen werden, kann die Fehlerwahrscheinlichkeit bei der manuellen Einstellung des Prüfstands reduziert werden.

Um es den Herstellern der Diagnosesoftware und -vorrichtungen zu ermöglichen, ihre Prüfprotokolle und Software optimal an die Funktionen des Prüfstands anzupassen, ist es vorteilhaft, in dem standardisierten Datenformat die Funktionen und Prüfabfragen des Prüfstands und den Zugriff auf den Prüfstand zu beschreiben. Beispielsweise kann eine ODX-Datei oder eine ODX-Datenbank für den jeweiligen Prüfstand bereitgestellt werden, in der die UDS-Services, mit denen auf den Prüfstand zugegriffen werden kann, dokumentiert sind. Derartige vom Prüfstandhersteller zur Verfügung gestellte Datenbanken, die im ODX-Format den Zugriff auf die elektronischen Steuereinheit bzw. auf den Fahrzeugprüfstand beschreiben, ermöglichen somit den Herstellern von Diagnosegeräten die Vorgabe von individuellen Prozessketten, mit denen beispielsweise Messwerte automatisiert am Prüfstand aufgenommen werden können, um diese Messung einfach in den Diagnosevorgang beim Fahrzeug zu integrieren.

Mit der bereitgestellten Schnittstelle, die die Prüfvorrichtung und den Prüfstand über ein standardisiertes Datenformat und standardisiertes Kommunikationsprotokoll verbindet, können somit nicht nur einzelne Steuerbefehle oder Prüfabfragen, sondern vollständig auszuführende Prüfprotokolle an den Prüfstand übermittelt werden, die dieser dann während der Fahrzeugdiagnose in Abstimmung mit der Diagnosevorrichtung ausführt. Somit kann der Prüfstand automatisiert an die Prüfvorgaben der Fahrzeughersteller und ihrer Prüfprotokolle angepasst werden.

Hierbei ist es vorteilhaft, vor Ausführung des empfangenen Prüfprotokolls eine Sicherheitsprüfung durch die Steuerung des Prüfstands vorzunehmen, bei der auf Basis vorbestimmter Betriebsparameter des Prüfstands das Prüfprotokoll dahingehen geprüft wird, ob die Ausführung des Prüfprotokolls diese vorbestimmten Betriebsparameter einhält. Dadurch kann sichergestellt werden, dass trotz des Fremdzugriffs auf den Prüfstand die vorbestimmten Sicherheits- und Betriebsgrenzen des Prüfstandes eingehalten werden und dieser beispielsweise nicht durch zu schnelles Anfahren oder zu hohe Umdrehungszahlen in einen sicherheitskritischen Bereich gesteuert wird.

Bei einer vorteilhaften Ausgestaltungsform kann die Steuerung des Prüfstands über die bidirektionale Schnittstelle auf eine elektronische Steuervorrichtung eines Kraftfahrzeugs zugreifen, um in dem standardisierten Datenformat Steuerbefehle oder Diagnoseanfragen an die elektronische Steuereinheit des Fahrzeugs zu senden und/oder um Fahrzeugdiagnosedaten von der elektronischen Steuereinheit zu empfangen. Mit anderen Worten kann der Prüfstand in dieser Ausgestaltungsform aktiv auf das Fahrzeug zugreifen und einwirken. Beispielsweise könnte der Prüfstand von der elektronischen Steuervorrichtung des Fahrzeugs geeignete Diagnose- oder Kennwerte abfragen, wie Drehzahlen, Zündungswerte oder die Ansauglufttemperatur, um auf Basis dieser Werte die Prüfprozesse des Prüfstands anzupassen. So könnte beispielsweise eine Leistungsmessung unterbrochen werden, wenn ein von der elektronischen Steuervorrichtung des Fahrzeugs übermittelter Wert über die Ansauglufttemperatur zu hoch ist und anzeigt, dass sich das Fahrzeug bereits in einem Notlaufbetrieb befindet.

Bei einer weiteren vorteilhaften Ausgestaltungsform kann die Steuerung des Prüfstands aktiv über Steuerbefehle so auf die elektronische Steuereinheit des Fahrzeugs zugreifen, dass der Betriebszustand des Fahrzeugs gesteuert und angepasst wird, während die Steuerung des Prüfstands auf dem Prüfstand ein Prüfprotokoll ausführt, um so sowohl den Betrieb des Fahrzeugs als auch den Betrieb des Prüfstands aufeinander und auf das Prüfprotokoll abzustimmen.

Die Schnittstelle, die die Steuerung der externen Diagnosevorrichtung mit der Steuerung des Prüfstands verbindet, kann als dynamische Bibliothek bereitgestellt werden, die in eine Laufzeitumgebung der Diagnosevorrichtung dynamisch eingebunden werden kann. Hierdurch kann die Funktionalität der Diagnosevorrichtung dynamisch auf einfache Weise erweitert werden, damit diese mit dem gleichen Datenformat auf die elektronische Steuervorrichtung zugreifen kann.

Weiterhin kann auch die gesamte Funktionalität des ersten Steuermittels als dynamische Bibliothek in die Laufzeitumgebung der Diagnosevorrichtung eingebunden werden.

Die Erfindung betrifft weiterhin eine Schnittstellenvorrichtung, die mit einem ersten Steuermittel eines Kraftfahrzeugprüfstands zur Leistungs-, Bremsen-, Abgas- oder Funktionsprüfung eines Kraftfahrzeugs kommuniziert und eingerichtet ist, Steuerbefehle und/oder Prüfanfragen für den Kraftfahrzeugprüfstand zu empfangen und vom Kraftfahrzeugprüfstand ermittelte Messwerte auszugeben. Hierbei verwendet die Schnittstellenvorrichtung eine standardisiertes Datenformat und vorzugsweise ein standardisiertes Kommunikationsprotokoll, welche für den Zugriff auf eine elektronische Steuervorrichtung des Kraftfahrzeugs eingesetzt werden.

Die erfindungsgemäße Schnittstellenvorrichtung kann sowohl in die Diagnosevorrichtung als auch in den Fahrzeugprüfstand integriert werden. Ein Fahrzeugprüfstand mit einer derartigen Schnittstellenvorrichtung kann weiterhin eingerichtet sein, auch direkt, das heißt ohne Zugriff über die Diagnosevorrichtung, auf die elektronische Vorrichtung eines Fahrzeugs zuzugreifen, um Steuerbefehle oder Diagnoseanfragen an die elektronische Steuereinheit des Fahrzeugs zu senden und/oder um Fahrzeugdiagnosedaten direkt von der elektronischen Steuereinheit zu empfangen. Damit kann ein auf dem Fahrzeugprüfstand ausgeführter Prüfvorgang in Abhängigkeit der empfangenen Fahrzeugdiagnosedaten angepasst werden.

Eine Diagnosevorrichtung für ein Kraftfahrzeug, die eine derartige Schnittstellenvorrichtung umfasst, kann mittels des gleichen Datenformats und des gleichen Kommunikationsprotokolls sowohl auf die elektronische Steuervorrichtung eines Fahrzeugs als auch auf den Prüfstand steuernd und zwecks Datenabfrage zugreifen.

Zusammenfassend ermöglicht die vorliegende Erfindung einer Diagnosevorrichtung auf den Prüfstand in derselben Weise zuzugreifen, wie auf die elektronischen Steuervorrichtungen des Kraftfahrzeugs, so dass sich der Prüfstand von einem Onboard-Steuergerät diagnosetechnisch und zugriffstechnisch nicht mehr unterscheidet. Dies ermöglicht, Prozesse der Fahrzeughersteller (OEMs) an die verschiedenen Prüfstände für herstellerspezifisch festgelegte Diagnoseprozesse vorzugeben und diese gleichzeitig zu steuern. Die Verwendung eines universalen Datenaustauschformats führt damit zur Vereinfachung von Diagnosevorgängen in der Werkstatt und zu einer Kosteneinsparung bei der Fahrzeugdiagnose in Verbindung mit einem Leistungs-, Bremsen-, Abgas- oder Funktionsprüfstand.

Bevorzugte Ausführungsformen der vorliegenden Erfindung werden im Folgenden unter Bezugnahme auf die beigefügten Zeichnungen näher beschrieben.
- Fig. 1: illustriert schematisch einen Prüfvorgang eines Fahrzeugs unter Verwendung einer externen Diagnosevorrichtung und eines Fahrzeugprüfstands gemäß einem Ausführungsbeispiel der vorliegenden Erfindung;
- Fig. 2: zeigt schematisch den Aufbau einer externen Diagnosevorrichtung für ein Fahrzeug und deren Zusammenspiel mit dem Fahrzeugprüfstand gemäß einem Ausführungsbeispiel der vorliegenden Erfindung;
- Fig. 3: zeigt schematisch den Aufbau einer externen Diagnosevorrichtung für ein Fahrzeug und deren Zusammenspiel mit dem Fahrzeugprüfstand gemäß einem weiteren Ausführungsbeispiel der vorliegenden Erfindung; und
- Fig. 4: illustriert schematisch die Schritte eines Prüfverfahrens zur Leistungs-, Bremsen-, Abgas- oder Funktionsprüfung eines Kraftfahrzeugs mittels eines Kraftfahrzeugprüfstands gemäß einem Ausführungsbeispiel der vorliegenden Erfindung.

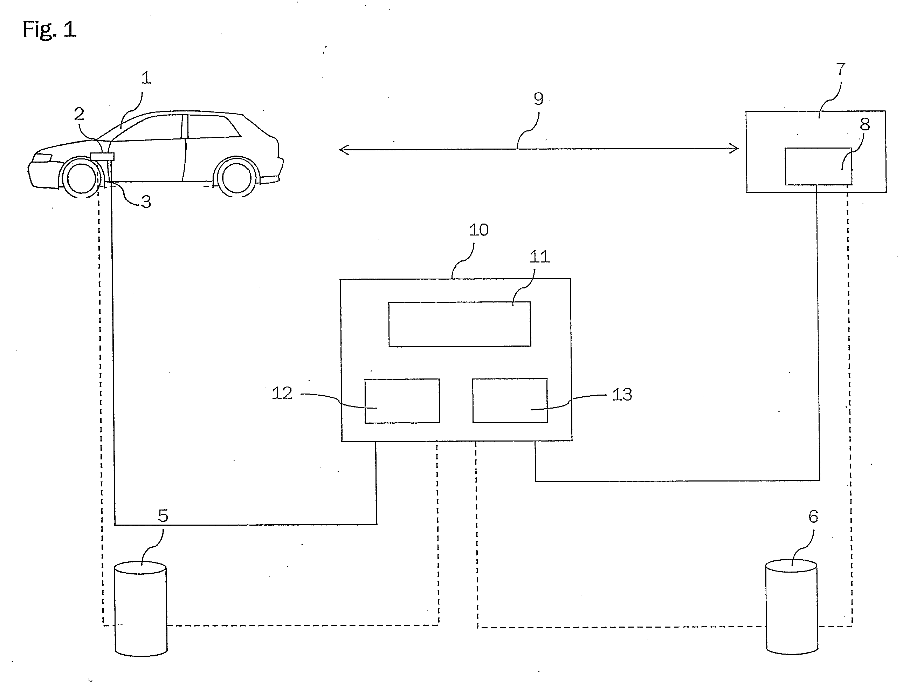

Fig. 1 illustriert schematisch eine Fahrzeugdiagnose bzw. einen Prüfvorgang eines Fahrzeugs unter Einsatz eines Fahrzeugprüfstands 7. Der Fahrzeugprüfstand 7 kann ein Leistungs-, Bremsen-, Abgas- oder sonstiger Funktionsprüfstand für ein Fahrzeug sein. Je nach Prüfstand kann die Verbindung 9 zwischen Fahrzeug 1 und Prüfstand 7 mechanisch, elektrisch, hydraulisch und/oder pneumatisch erfolgen.

Während der Fahrzeugdiagnose greift eine Diagnosevorrichtung 10, beispielsweise ein Computer mit einer darauf installierten Diagnosesoftware eines Fahrzeugherstellers, über die Diagnoseschnittstelle 3 des Fahrzeugs 1 auf eine elektronische Steuervorrichtung 2 des Fahrzeugs, beispielsweise die Motorsteuerung zu. Hierzu ist die Diagnoseschnittstelle 3 mit einem Datenkabel mit dem Diagnosegerät 10 verbunden. Weiterhin ist das Steuergerät 10 eingerichtet, auf eine elektronische Steuerung 8 des Prüfstands 7 zuzugreifen. In der abstrahierten Darstellung der Fig. 1 illustriert der Block 11 die Steuerung des Diagnosegeräts 10. Der Datenaustausch des Diagnosegeräts 10 mit dem Fahrzeug 1 erfolgt über die Schnittstelle 12, die die verwendeten Protokollschichten abstrahiert und Diagnoseanfragen an die Steuervorrichtung 2 des Fahrzeugs 1 in verschiede Kommunikationsprotokolle übersetzt. Der Datenaustausch des Diagnosegeräts mit der Steuerung des Prüfstands 8 erfolgt über eine zweite Schnittstelle 13. Wie in den nachfolgenden Figuren noch detaillierter erläutert wird, erfolgt die Kommunikation der Steuervorrichtung mit den beiden Schnittstellen 12 und 13 auf Basis des gleichen Datenformats.

Damit die Hersteller der Diagnosegeräte 10 wissen, welche Steuerbefehle und Diagnosewerte die elektronische Steuervorrichtung 2 des Fahrzeugs 1 zur Verfügung stellt, wird die entsprechende Funktionalität der Steuervorrichtung des Fahrzeugs in einer ODX-Datei 5 vorab von den Fahrzeugherstellern zur Verfügung gestellt. Fig. 1 illustriert weiterhin, dass eine ODX-Datenbank 6 bereitgestellt wird, in der die Funktionalität des Prüfstands beschrieben ist. Die ODX-Datenbank beschreibt beispielsweise, mit welchen UDS-Services auf den Prüfstand zugegriffen werden kann und welche Daten in welchem Format abgefragt werden können. Auf Basis dieser Datenbank kann der Diagnosegeräteentwickler den Zugriff des Diagnosegeräts 10 auf den Prüfstand 7 und das Fahrzeug 1 anpassen.

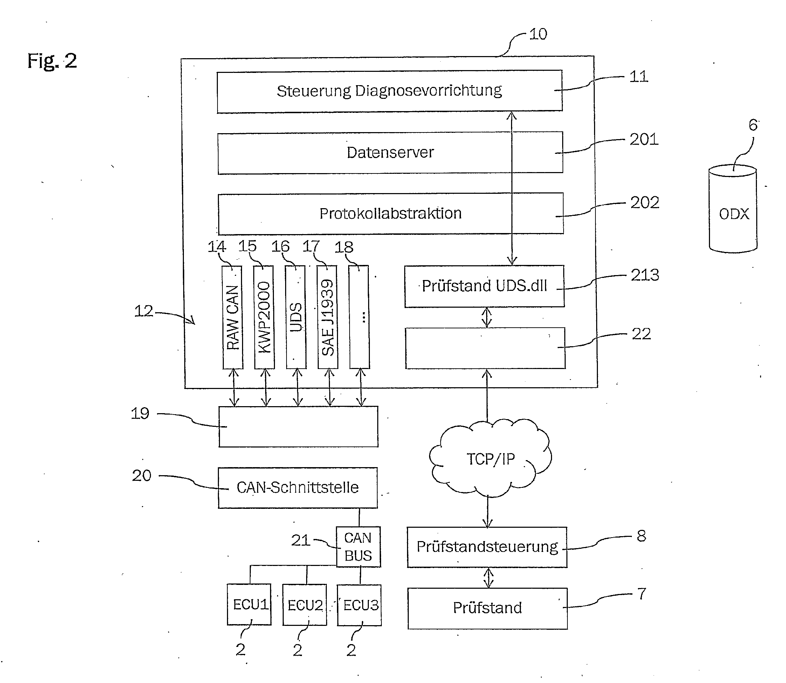

Ein Ausführüngsbeispiel eines detaillierteren Aufbaus eines Diagnosegeräts 10 und einer Schnittstellenvorrichtung zur Kommunikation mit dem Prüfstand ist in Fig. 2 beispielhaft dargestellt. Das Diagnosegerät 10 hat eine zentrale Gerätesteuerung 11, die über eine nicht dargestellte Benutzerschnittstelle bedient werden kann, um verschiedene vordefinierte oder benutzerspezifisch eingestellte Diagnoseprotokolle auszuwählen und auszuführen. Fig. 2 illustriert die mehrschichtige Architektur des Diagnosegeräts 10. Für die Kommunikation mit dem Fahrzeug 1 bzw. dem Prüfstand 7 greift die Steuerung 11 auf einen Datenserver 201 zu, der zur Protokollabstraktion eine standardisierte Schnittstelle 202, hier die DINgenormte SAE J2534, aufweist. Die Protokollabstraktionsschicht 202 ermöglicht einen modularen Aufbau des Diagnosegeräts 10, um verschiedenste Protokolle einbinden zu können bzw. um die Funktionalität bei Bedarf um weitere unterstützte Protokolle erweitern zu können, ohne die Anwendungslogik in den oberen Schichten anpassen zu müssen. Beispielsweise kann für die Kommunikation mit einer elektronischen Steuervorrichtung eines Fahrzeugs ein RAW-CAN-Protokoll 14, das KWP2000-Protokoll 15, das UDS-Protokoll 16, der SAE J1939 Standard oder weitere Protokollfunktionalitäten 18 verwendet werden, wobei entsprechende Datenanfragen bzw. empfangene Daten in diesen Blöcken abhängig vom zugrundeliegenden Protokoll übersetzt werden. Nachdem Diagnoseanfragen der Diagnosegerätesteuerung 11 an die Steuereinheit 2 des Fahrzeugs 1 über die Schnittstelle 202 an das entsprechende Protokollmodul 14 bis 18 weitergeleitet worden ist, werden Anfragen über eine CAN Multithread-Schnittstelle 19 (sog. Multithread CAN API) gegebenenfalls serialisiert und an eine CAN-Schnittstelle 20 weitergeleitet. Von dort werden die Anfragen über den CAN-BUS 21 an die verschiedenen elektronischen Steuereinheiten 2 weitergeleitet.

Gemäß der vorliegenden Erfindung ist es möglich, auf den Prüfstand 7 diagnose- und zugriffstechnisch in derselben Weise anzusteuern, wie die elektronischen Steuervorrichtungen 2 des Fahrzeugs 1. Hierzu werden, wie zuvor beschrieben, die Funktionen des Prüfstands, wie Steuern, Einstellen und Abfragen von Prüfstandwerten, im ODX-Standard beschrieben, so dass die ODX-Datei 6 die Prüfstandfunktionen als UDS-Services dokumentiert.

Weiterhin wird ein Schnittstellenmodul 213 bereit gestellt, das als dynamische Bibliothek in die Laufzeitumgebung des Diagnosegeräts 10 eingebunden wird. In einem Windows-basierten System kann dies beispielsweise über sogenannte Dynamic Link Libraries (*.dII-Dateien) realisiert werden. In Fig. 2 ist das Schnittstellenmodul exemplarisch mit "Prüfstand UDS.dII" bezeichnet. Das Schnittstellenmodul 213 ermöglicht eine bidirektionale Kommunikation zwischen Diagnosevorrichtung 10 und Prüfstand 7. Das Schnittstellenmodul 213 empfängt Prüfstandsanfragen der Steuerung 11 der Diagnosevorrichtung 10 im ODX-Format und gibt angefragte Prüfstandsdaten vom Prüfstand 7 an die Steuerung 11 im ODX-Format aus. Im vorliegenden Ausführungsbeispiel werden ODX-Anfragen von dem Schnittstellenmodule 213 in das proprietäre Prüfstandsprotokoll und Datenformat übersetzt und an das proprietäre Protokollmodul 22 des Prüfstands weitergeleitet. Das Protokollmodul 22 entspricht dem bisherigen Protokoll, um Prüfstandinformationen abzufragen. In den vorliegenden Ausführungsbeispielen werden diese über ein TCP-IP-Netzwerkprotokoll an eine Prüfstandsteuerung 8 übertragen. Die Prüfstandsteuerung 8 kann entweder direkt auf dem Prüfstand oder auf einem separaten Gerät installiert sein, das beispielsweise mit einer Funk- oder Kabelverbindung mit dem Prüfstand 7 verbunden ist.

Die vorliegende Erfindung ermöglicht somit über die Schnittstelle 213 einen Zugriff auf den Prüfstand in gleicher Weise wie auf die elektronische Steuervorrichtung des Fahrzeugs, ohne dass der Prüfstand selbst geändert werden muss. Somit können auch existierende Prüfstände mit verschiedensten Funktionaltäten oder verwendeten Datenformaten und Protokollen mit Diagnosegeräten 10 in effizienter Weise gekoppelt werden. Es ist besonders vorteilhaft, dass der ODX-basierte Ansatz nur eine vergleichsweise geringfügige Modifikation der Diagnosevorrichtung 10 erfordert.

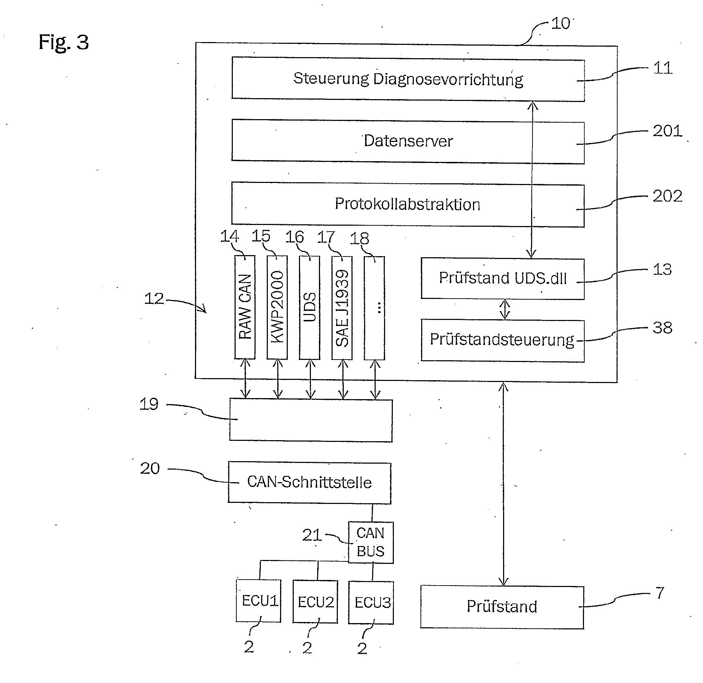

Fig. 3 zeigt ein weiteres Ausführungsbeispiel. Das Ausführungsbeispiel in Fig. 3 unterscheidet sich von dem Ausführungsbeispiel in Fig. 2 dadurch, dass zusätzlich auch das Zugriffsmodul des Prüfstands als dynamische Bibliothek 38 bereitgestellt wird, die in die Laufzeitumgebung des Diagnosegeräts eingebunden wird. Das Zugriffsmodul 38 ermöglicht den Zugriff auf die Prüfstandsfunktionen und - daten. Somit können Diagnosevorrichtungen in einfacher Weise um die Prüfstandssteuerungsfunktionalität erweitert werden.

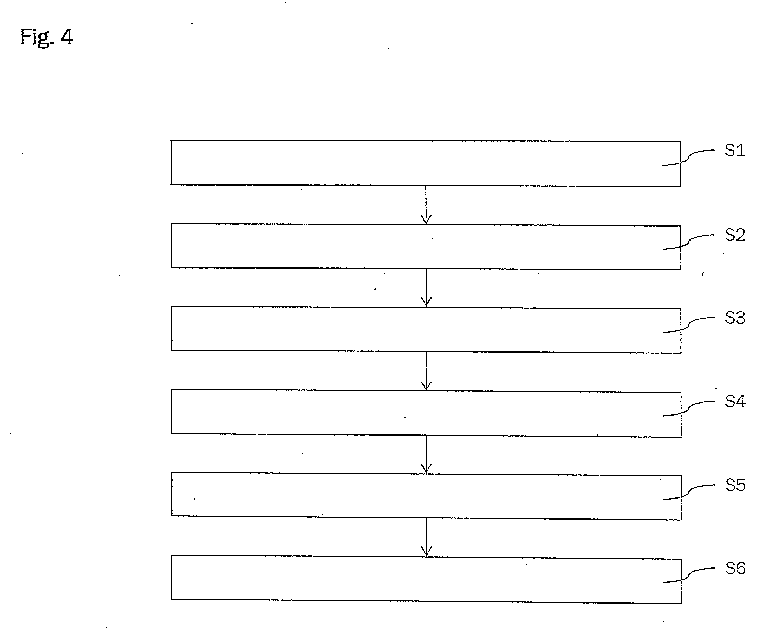

Fig. 4 illustriert die Schritte eines Prüfverfahrens zur Leistungs-, Bremsen-, Abgas- oder Funktionsprüfung eines Kraftfahrzeugs mittels eines Kraftfahrzeugprüfstands gemäß einem Ausführungsbeispiel der vorliegenden Erfindung. In Schritt S1 wird eine Datenbank oder eine Datei in einem standardisierten Datenformat bereitgestellt, in der die Funktionen und Prüfabfragen des Prüfstands 7 und der Zugriff auf den Prüfstand mittels des standardisierten Kommunikationsprotokolls beschrieben ist. Dies entspricht der vorstehend beschriebenen ODX-Datei 6. In Schritt S2 wird eine Schnittstelle bereitgestellt, die die bidirektionale Datenkommunikation zwischen der Steuerung 8 des Kraftfahrzeugprüfstands und der Steuerung des Diagnosegeräts 10 ermöglicht. In Schritt S3 wird dann ein Steuerbefehl oder eine Prüfabfrage für den Kraftfahrzeugprüfstand von der Steuerung 11 des Diagnosegeräts an die Schnittstelle 13 übermittelt. Falls der Prüfstand nicht direkt Anfragen im ODX-Format über das UDS-Protokoll empfangen kann, wird in Schritt S4 eine Übersetzung in das vom Prüfstand verwendete Datenformat und Kommunikationsprotokoll vorgenommen. Im Schritt S5 gibt der Prüfstand Prüfdaten, die der Prüfstand ermittelt hat, an die Schnittstelle 13 zurück, wobei diese wiederum durch die Schnittstelle in Schritt S6 in das standardisierte Datenformat rückübersetzt werden.

Die einzelnen Merkmale der Erfindung sind selbstverständlich nicht auf die beschriebenen Kombinationen von Merkmalen im Rahmen der vorgestellten Ausführungsbeispiele beschränkt und können in Abhängigkeit vorgegebener Vorrichtungsparameter auch in anderen Kombinationen eingesetzt werden. Insbesondere können die zuvor beschriebenen Merkmale der Schnittstellenvorrichtung und des Diagnosegeräts im Zusammenspiel mit dem Prüfstand auch mit dem Prüfverfahren kombiniert werden. Weiterhin kann die erfindungsgemäße Schnittstellenvorrichtung sowohl als Teil des Diagnosegeräts 10 als auch direkt als Teil des Prüfstands 7 realisiert werden. In letzterem Fall kann der Prüfstand dahingehend eingerichtet sein, dass er direkt mit der Diagnoseschnittstelle 3 verbunden werden kann, um auf die elektronische Steuerung des Fahrzeugs zuzugreifen.

## Patentansprüche

1. Prüfverfahren zur Leistungs-, Bremsen-, Abgas-, Sicherheits- oder Funktionsprüfung eines Kraftfahrzeuges (1) mittels eines Kraftfahrzeugprüfstands (7), umfassend die Schritte:
Bereitstellen einer Schnittstelle (13), die eine bidirektionale Datenkommunikation zwischen einem ersten Steuermittel (8) des Kraftfahrzeugprüfstands (7) und einem zweiten Steuermittel (11) einer Diagnosevorrichtung (10) für ein Kraftfahrzeug ermöglicht, wobei die Diagnosevorrichtung (10) über eine Diagnoseschnittstelle (3) des Kraftfahrzeugs (1) mit einer elektronischen Steuervorrichtung (2) des Kraftfahrzeugs kommuniziert;
Empfangen eines Steuerbefehls und/oder einer Prüfabfrage für den Kraftfahrzeugprüfstand (7) von dem zweiten Steuermittel (11) über die Schnittstelle (13) und Ausgeben eines durch den Kraftfahrzeugprüfstand (7) ermittelten Messwertes an das zweite Steuermittel (11) über die Schnittstelle (13), wobei für die Kommunikation zwischen dem zweiten Steuermittel (11) und der Schnittstelle (13) ein standardisiertes Datenformat verwendet wird, das auch für die Kommunikation der Diagnosevorrichtung (10) mit der elektronischen Steuervorrichtung (2) des Kraftfahrzeugs (1) verwendet wird.

2. Prüfverfahren nach Anspruch 1, weiter umfassend den Schritt: Bereitstellen einer Datenbank (6) in dem standardisierten Datenformat, in der die Funktionen und Prüfabfragen des Prüfstands (7) und der Zugriff auf den Prüfstands mittels dem standardisierten Kommunikationsprotokoll beschrieben sind.

3. Prüfverfahren nach Anspruch 1 oder 2, wobei das standardisierte Datenformat dem Open Diagnostic Data Exchange (ODX)-Standard entspricht.

4. Prüfverfahren gemäß einem der vorstehenden Ansprüche, wobei die empfangenen Steuerbefehle und/oder Prüfabfragen einem auszuführenden Prüfprotokoll entsprechen, umfassend den Schritt: Ausführen des empfangenen Prüfprotokolls auf dem Prüfstand (7).

5. Prüfverfahrens nach Anspruch 4, wobei vor Ausführung des empfangenen Prüfprotokolls eine Sicherheitsprüfung durch das erste Steuermittel (8) vorgenommen wird, bei der auf Basis vorbestimmter Betriebsparameter des Prüfstands das Prüfprotokoll dahingehend überprüft wird, ob die Ausführung des Prüfprotokolls diese vorbestimmten Betriebsparameter einhält.

6. Prüfverfahren nach einem der vorstehenden Ansprüche, wobei bei Ausführen eines Prüfprotokolls das erste Steuermittel (8) über die Schnittstelle (13) auf die elektronische Steuervorrichtung (2) eines Kraftfahrzeugs (1) zugreift, um in dem standardisierten Datenformat Steuerbefehle oder Diagnoseanfragen an die elektronische Steuereinheit (2) des Fahrzeugs (1) zu senden und/oder um Fahrzeugdiagnosedaten von der elektronischen Steuereinheit (2) zu empfangen.

7. Prüfverfahren nach Anspruch 6, wobei das erste Steuermittel (8) den Kraftfahrzeugprüfstand (7) in Abhängigkeit von Fahrzeugdiagnosedaten steuert, die das erste Steuermittel (8) von der elektronischen Steuervorrichtung (2) des Kraftfahrzeugs abgefragt hat.

8. Prüfverfahren nach den Ansprüchen 6 oder 7, wobei das erste Steuermittel (8) einen Betriebszustand eines mit dem Prüfstand zu testenden Fahrzeugs (1) aktiv über Steuerbefehle, die an die elektronische Steuereinheit (2) über die Schnittstelle (13) gesendet werden, steuert, während das erste Steuermittel (8) den Prüfstand (7) zur Ausführung eines Prüfprotokolls steuert, um den Betriebszustand des Fahrzeugs (1) gemäß dem Prüfprotokoll anzupassen.

9. Prüfverfahren nach einem der vorstehenden Ansprüche, wobei die Schnittstelle (13) als dynamische Bibliothek (213) bereitgestellt wird, die in eine Laufzeitumgebung der Diagnosevorrichtung (10) dynamisch eingebunden werden kann.

10. Prüfverfahren nach einem der vorstehenden Ansprüche, weiter umfassend den Schritt: Bereitstellen der Funktionalität des ersten Steuermittels (8) des Fahrzeugprüfstands (7) als dynamische Bibliothek (38), die in die Laufzeitumgebung der Diagnosevorrichtung (10) dynamisch eingebunden werden kann.

11. Schnittstellenvorrichtung (13), die mit einem ersten Steuermittel (8) eines Kraftfahrzeugprüfstands zur Leistungs-, Bremsen-, Abgas-,Sicherheits- oder Funktionsprüfung eines Kraftfahrzeuges kommuniziert, und eingerichtet ist, Steuerbefehle und/oder Prüfanfragen für den Kraftfahrzeugprüfstand (7) zum empfangen und vom Kraftfahrzeugprüfstand (7) ermittelte Messwerte auszugeben, wobei die Schnittstellenvorrichtung (13) hierfür ein standardisiertes Datenformat verwendet, das für den Zugriff auf eine elektronische Steuervorrichtung (2) des Kraftfahrzeugs (1) zur Abfrage von Diagnosedaten eingesetzt wird.

12. Fahrzeugprüfstand zur Leistungs-, Bremsen-, Abgas-, Sicherheits- oder Funktionsprüfung eines Kraftfahrzeuges, umfassend eine Schnittstellenvorrichtung gemäß Anspruch 11.

13. Fahrzeugprüfstand nach Anspruch 11 oder 12, der eingerichtet ist, über die Schnittstellenvorrichtung (13) auf die elektronische Steuervorrichtung (2) eines Kraftfahrzeugs (1) zuzugreifen, um Steuerbefehle oder Diagnoseanfragen an die elektronische Steuereinheit (2) des Fahrzeugs (1) zu senden und/oder um Fahrzeugdiagnosedaten von der elektronischen Steuereinheit (2) zu empfangen, wobei ein auf dem Fahrzeugprüfstand (7) ausgeführtes Prüfvorgang in Abhängigkeit der empfangenen Fahrzeugdiagnosedaten angepasst wird.

14. Diagnosevorrichtung (10) für ein Kraftfahrzeug, umfassend eine Schnittstellenvorrichtung (13) gemäß Anspruch 11, wobei die Diagnosevorrichtung (10) eingerichtet ist, sowohl Diagnosebefehle an eine elektronische Steuervorrichtung (2) eines Fahrzeugs (1) zu senden und Diagnosewerte des Fahrzeugs (1) vön der elektronischen Steuervorrichtung (2) zu empfangen als auch über die Schnittstellenvorrichtung (13) Steuerbefehle und/oder eine Prüfabfrage an den Fahrzeugprüfstand (7) zu senden und Messwerte des Kraftfahrzeugprüfstands (7) zu empfangen, wobei die Diagnosevorrichtung (10) für die Kommunikation mit der elektronischen Steuervorrichtung (2) des Kraftfahrzeugs (1) und die Kommunikation mit der Schnittstellenvorrichtung (13) dasselbe standardisiertes Datenformat verwendet.

15. Diagnosevorrichtung nach Anspruch 14, wobei der Datenaustausch mit der elektronischen Steuervorrichtung (2) des Kraftfahrzeugs (1) und der Datenaustausch mit dem Fahrzeugprüfstand (7) über dieselbe physikalische Schnittstelle ausgeführt werden.
